Europäisches Patentamt

European Patent Office

Office européen des brevets

(11) Publication number: **0 464 438 A1**

# EUROPEAN PATENT APPLICATION

(21) Application number: **91109855.6**

(22) Date of filing: **15.06.91**

(51) Int. Cl.5: **B60C 11/00**

(30) Priority: **06.07.90 US 549333**

(43) Date of publication of application:
**08.01.92 Bulletin 92/02**

(84) Designated Contracting States:
**AT BE CH DE DK ES FR GB GR IT LI LU NL SE**

(71) Applicant: **The Uniroyal Goodrich Tire Company**
**600 South Main Street**
**Akron Ohio 44397-0001(US)**

(72) Inventor: **Witt, Howard William**
**6886 Woodbank Drive**
**Birmingham, Michigan 48010(US)**

(74) Representative: **Selting, Günther, Dipl.-Ing. et al**
**Patentanwälte von Kreisler, Selting, Werner**
**Deichmannhaus am Hauptbahnhof**
**W-5000 Köln 1(DE)**

(54) Arbitrarily selected prime numbers to provide pitch sequences with minimized travel noise.

(57) For any given pitch sequence in the design of a tire's tread, relative pitches can be selected from a relatively small number of prime numbers arbitrarily chosen within a particular range of numbers so as to permit reasonable manipulation of the numbers in an available computer. The computer then furnishes a specific combination of pitches which combination is found to minimize travel noise for that tread design by simulating an actual test of a tire having that specific tread. A large number of combinations of variable relative pitches for a given pitch sequence in which one or more pitches might be repeated, may be evaluated by assessing string plots for each combination; thus, string plots in which the highest peaks (amplitudes) are above a preselected level are discarded as being objectionable and the large number of combinations is reduced to relatively few which may be evaluated visually or by using a computer program to choose only those string plots which have the lowest peaks and the widest distribution of the level of sound energy generated by the many pitches in the circumference of the tire's tread.

CYCLES/REV

Fig. 1

## BACKGROUND OF THE INVENTION

It is only over the past two decades that there has steadily developed a growing awareness that automobile tires can be designed which are not only safe at highway speeds under all driving conditions, including dry, thin and thick film wet surfaces, and snow, but are relatively quiet. The approach to designing a "quiet" tire has varied greatly. In recent years, the approach has been theoretical. A tread has been designed with a plurality of repetitive design cycles of variable pitch in accordance with certain mathematically calculated criteria.

The design is then cut by hand into the tread, or constructed into the tire mold, providing the tread with load bearing elements or "lugs" separated by transverse and circumferential grooves which define "pitches" and "pitch sequences" around the circumference of the tire. A "pitch" designates the relative length of a design element. The order in which pitches are used around the circumference of a tire is referred to as the "pitch sequence".

Since each "pitch" is the length of a design element, and there may be many different lengths which for practical purposes are limited to about nine or less, the actual specific length of any particular pitch for a chosen pitch sequence will vary depending upon the circumference of the tire. As a result, a specific pitch sequence with pitches of specified relative lengths on a first tire with diameter larger than that of a second tire, will produce an acoustic fingerprint (simulated by a characterizing "string plot" as will be explained hereinafter) which is the same as that of the second tire having the same pitches and pitch sequence, when the second tire is travelling at a speed slower than the first.

Specific tread designs are arrived at by methods disclosed in U.S. Patents Nos. 4,327,792 and 4,474,223 to Landers (class 152/subclass 209R). In another approach to optimizing tread design disclosed in U.S. Patent No. 4,598,747 to Flechtner (class 152/subclass 209R), incisions are made in each lug, the incisions having a wavelength and amplitude which are small compared with the dimensions of the lugs, and meeting other criteria as well. Still another mathematically designed tread is disclosed in U.S.Patent No. 4,598,748 to Campos et al (class 152/subclass 209R).

Whether any of the foregoing approaches to design a "quiet" tread is successful is determined by physically building a tire of appropriate dimensions for the tread design to be tested, then testing the tire. Testing the tire for "noise level and quality" is typically done by mounting four (or fewer) test tires on the wheel rims of an automobile driven by a person with a sensitive and well-trained ear.

A far more convenient and highly reliable method for testing a tread design for its noise generation characteristics is provided in a simulation of the actual tire tread noise as it travels upon a road surface, but done in a computer, details of which method are disclosed in U.S. Patent No. 4,727,501 to Parker et al (class 364/subclass 574).

Each of the foregoing methods suffers from being able to design and "test" only a greatly limited number of pitches and pitch sequences so that each method is burdened with the likelihood, large or small, that it has missed a particularly quiet pitch sequence, and missed the optimum pitches.

The method of this invention minimizes that likelihood.

## SUMMARY OF THE INVENTION

It has been discovered that, for any given pitch sequence in the design of a tire's tread, relative pitches can be selected from a relatively small number of prime numbers arbitrarily chosen within a particular range of numbers so as to permit reasonable manipulation of the numbers in an available computer. The computer then furnishes a specific combination of pitches which combination is found to minimize travel noise for that tread design by simulating an actual test of a tire having that specific tread.

It is therefore a general object of this invention to provide a tire in which the tread is formed according to a designed pitch seqence of variable pitches derived from prime numbers greater than the highest frequency (cycles/rev) generated at the maximum velocity at which the tire is to be desirably free of objectionable noise; and, to provide a method for designing the pitches in a pitch sequence used in the tread of the tire, the method comprising using a computer programmed to simulate the travel noise associated with preselected pitches in a preselected pitch sequence.

It is also a specific object of this invention to generate a pitch sequence by either sequentially selecting pitch numbers greater than 150 (for a velocity of 60 m.p.h) or greater than 111 (for a velocity of 80 m.p.h.) at random, or by programming a computer to select pitch numbers using pseudo-random algorithms.

It is yet another object of this inventon to provide a method for evaluating a large number of combinations of variable relative pitches for a given pitch sequence in which one or more pitches might be repeated, by assessing string plots for each combination; thus, string plots in which the highest peaks (amplitudes) are above a preselected level are discarded as being objectionable and the large number of combinations is reduced to relatively few which may be evaluated visually or by using a computer program to choose only those string plots which have the lowest peaks and the widest distribution of the level of sound energy generated by the many pitches in the circumference of the tire's tread.

## BRIEF DESCRIPTION OF THE DRAWINGS

The foregoing and other objects and advantages of our invention will appear more fully from the following description, made in connection with the accompanying "string model plots" or "string plots" of various pitch combinations for the specific pitch sequence of five pitches set forth hereinabove, using different sets of relative pitches on a specific passenger tire:

Fig 1 is a string plot in which amplitude (ordinate) is plotted against harmonic number (abcissa) as a function of cycles/rev of the tire as it generates sound. The string plot is generated using the five pitches (of different lengths) of the commercially successful SC32A pitch sequence.

Fig 2 is a string plot generated using five different (distinct) pitches derived from five prime numbers using the same SC32A pitch sequence.

Fig 3 is a string plot generated using five different pitches derived from five prime numbers using the same SC32A pitch sequence, but allowing one or more of the pitches to be repeated; where only one pitch is repeated, the effect is to have a five-pitch sequence using only four pitches.

## DETAILED DESCRIPTION OF PREFERRED EMBODIMENTS

Since noise is inherently subjective, due to the psychoacoustical effects involved, there is no known mathematical criterion to define noise. It is therefore necessary to subjectively evaluate a tire for noise acceptability. Historically this has been done as stated hereinabove, by hand-cutting and testing a set of tires.

To program a computer to simulate travel noise associated with preselected pitches and pitch sequences one must consider both, the pitch sequences and the number of pitches to be used.

Consider the number of pitches in a pitch sequence designated by the code "SC32A" in a popular tire manufactured for passenger automobiles. These are set forth below:

| Pitch Number | Pitch |
|---|---|
| 1 | 75.0 |
| 2 | 87.5 |
| 3 | 100.0 |
| 4 | 112.5 |
| 5 | 125.0 |

Pitch Sequence

1 2 3 4 2 3 4 5 4 3 2 1 3 4 5 2 2 5 4 3 1 2 3 4 5 4 3 2 4 3 2 1

The number of possible pitch sequences is much too large to be considered in a practical computer optimization.

This number of sequences $= n^N$

where

n = number of different pitches used, and

N = total number of pitches in the sequence.

For the above sequence in SC32A, n = 5, and N = 32.

Therefore the No. of sequences $= 5^{32} = 2.3 \times 10^{22}$

Should a computer be programmed to evaluate 100 sequences per second (say), an exhaustive computer evaluation of all possible sequences would require about $7 \times 10^{12}$ years!

The problem now addressed is to take a specific pitch sequence, one generated at random, or by any other means, then to determine pitches which minimize the resultant noise.

The pitches may assume any real values within practical engineering limits. If travel noise is an analytic function of the pitches, mathematical optimization algorithms may be employed to determine pitches which minimize noise. Computer simulations have shown, however, that travel noise is not an analytic function of the pitches. If travel noise is defined as an algebraic expression involving noise amplitudes over audible frequencies, then noise is not a differentiable function of the pitches, and mathematical optimization algorithms prove ineffectual.

A computer simulation for determining pitches must therefore be based on the systematic consideration of a finite number of discrete pitches. A scheme for selecting a finite number of combinations to be considered in a computer optimization of simulated travel noise, is as follows:

Let

$n$ = no. of different pitches used, and

$a_i$ = pitch i, where $i = 1, 2, \ldots, n$.

Variable pitches are chosen to avoid repetitious cycles in the tread pattern, which cycles produce a recurring noise at audible frequencies. I find that repetitious cycles occur when ratios of pitches can be reduced to simple fractions, and this occurs, inadvertently in tires sold in commerce.

Consider a simple example in which

$a_1 = 1/2$ and $a_2 = 2/3$; then $a_1 / a_2 = 3/4$.

Three pitches of length $a_2$ = four pitches of length $a_1$, which establishes a propensity for repetition which may be schematically illustrated as follows:

| 2/3 | 2/3 | 2/3 |
|---|---|---|
| 1/2 | 1/2 | 1/2 | 1/2 |

Generalizing, repetition can occur whenever

$$N_i\, a_i + N_j\, a_j = M_i\, a_i + M_j\, a_j$$

for any integers $N_i, N_j, M_i, M_j$ for which $N_i = M_i$, or $N_j = M_j$ An equivalent statement is that repetition can occur whenever

$$\frac{a_i}{a_j} = \frac{I_i}{I_j}$$

for any integers $I_i$ and $I_j$.

On the other hand, if the ratio $a_i / a_j$ is an irrational number, then, by definition, there exist no integers $I_i$, $I_j$ for which

$$\frac{a_i}{a_j} = \frac{I_i}{I_j}$$

therefore, repetition cannot occur.

The mathematical definition of an irrational number is of no practical use however, since it involves infinite decimal expansions which have little bearing on practical engineering specifications. For example, $\pi$ = 3.14159265. . is irrational

but $\pi$ = 3.14159265 is rational.

For practical purposes, it is suggested that pitch ratios be selected so as to be "functionally irrational", that is, so as to be equally unlikely to produce repetitious cycles within the range of objectionable noise frequencies. Assume the maximum objectionable noise frequency is equivalent to 150 cycles per tire revolution, and the following physical data:

| | |
|---|---|
| Range of "Noise"  = | 400 Hz to 2000 Hz |
| Tire diameter  = | 25 inches |
| Tire circumference  = | 78.5 inches  = 6.54 feet |
| Vehicle velocity  = | 60 m.p.h.  = 88 ft/sec |
| = | 13.5 revolutions/second |
| Lowest frequency  = | 400 Hz |
| = | 400/13.5  = 30 cycles/rev |
| Highest frequency  = | 2000 Hz |
| = | 2000/13.5  = 150 cycles/rev |

Then any ratio of pitches $a_i / a_j$, where $a_i < a_j$ can be considered "functionally irrational" for purposes of inadvertent noise generation if $a_i / a_j$ cannot be expressed as a ratio of integers with a denominator less than 150.

Therefore I chose to generate "functionally irrational" pitches to make each $a_i$ correspond to a prime number with the smallest prime number greater than 150.

Should I decide to screen pitch sequences for a speed up to 80 m.p.h for the same range of noise, the vehicle velocity is 117 ft/sec  = 18 revs/sec

The lowest frequency is now 400/18  = 22 cycles/rev

The highest frequency is now 2000/18  = 111 cycles/rev

Thus by screening for a higher velocity (than 60 m.p.h) one may choose prime numbers starting with a lower prime number, namely one which is greater than 111. Therefore one has a larger number of combinations to choose from, making it easier to get the optimum combination.

The choice of the prime number is then determined by the highest frequency (cycles/rev) generated by the highest velocity at which the tire is to travel.

Let us now consider a commercially successful pitch sequence in a passenger tire, namely the SC32A pitch sequence. It is found that these pitches yield ratios which can be expressed as rational numbers with small denominators. The pitches are as follows:

| i | $a_i$ |
|---|---|
| 1 | 75.0  = 100 x 3/4 |
| 2 | 87.5  = 100 x 7/8 |
| 3 | 100.0 |
| 4 | 112.5  = 100 x 9/8 |
| 5 | 125.0  = 100 x 5/4 |

Reverting to using prime numbers greater than 150, let us consider alternative pitches in the same SC32A pitch sequence. The pitch ratios for the pitches listed below are "functionally irrational" since each ratio $a_i / a_j$ is the ratio of the corresponding prime numbers which, by definition, cannot be reduced. These pitches are as follows:

| i | Prime No. | $a_i$  = (Prime No.) x 100/211 |
|---|---|---|
| 1 | 151 | 71.56 |
| 2 | 167 | 79.15 |
| 3 | 211 | 100.00 |
| 4 | 239 | 113.27 |
| 5 | 257 | 121.80 |

The task of selecting the optimum set of pitches could now be relegated to a computer programmed systematically to search for combinations of prime numbers, simulating the noise resulting from each combination of corresponding pitches used with the given pitch sequence, and analyzing the "fingerprint" generated as a "string plot" of the simulated noise for each combination. The optimum set of pitches is that for which the simulated noise was minimized.

Let us now address the problem of choosing a five pitch sequence to see if it bears any resemblance to the commercially successful sequence.

For the sake of practicality, we will choose to select prime numbers in the range from 150 to 300. The basis for the selection of 150 as the lower limit of the range has been explained. The selection of 300 as the upper limit of the range is simply to ensure that the ratio between any two pitches will not exceed 2. We have found from practrical experience that when this ratio exceeds 2, not only does the cosmetic appearance of the tread suffer, but also its circumferential uniformity.

A systematic search is begun by assigning the lowest prime number, 151, to correspond to the first pitch. The next lowest prime number, 157, is assigned to correspond to the second pitch, and so forth for the remaining three pitches. A computer simulation of tire noise is done for this combination of pitches and a "string" plot, that is, a plot showing the amplitude of noise produced at each frequency, is generated. This is done as follows:

The pitch sequence, with the length of each pitch defined by its corresponding prime number, establishes a mathematical function with respect to position around the circumference of the tire. This function is defined to be zero at all positions except at the intersections between pitches, where it is defined to be equal to a nonzero constant value. A mathematical function defined in this way characterizes the noise generating features of the pitch sequence, since it is generally accepted that the noise of a rolling tire is generated when individual design elements enter or exit contact with the road surface.

The resulting function is subjected to a harmonic analysis, a mathematical operation performed using well established computer procedures, which I use to generate a string model plot or "string plot" showing noise intensity at each audible frequency. This plot is termed a "string" plot" because it is developed from a mathematical model which resembles a string wrapped around the circumference of the tire. Following is a block diagram showing the steps involved in producing a string plot from a specified set of pitches and a pitch sequence.

```
┌─────────────────────────────────────────────────────────────┐
│                                                               │
│    Input of : Pitches a₁, a₂, a₃, . . .                       │
│                                                               │
│                 Pitch Sequence  i1  i2  i3  . . .  iN         │
│                                                               │
└─────────────────────────────────────────────────────────────┘
```

```
┌─────────────────────────────────────────────────────────────┐
│  Mathematical Function :  Noise vs. Position on Tire          │
│                                                               │
│                                                               │
│  Calculate:     L    =   total length of pitch sequence       │
│                                                               │
│                      =   aᵢ₁ + aᵢ₂ + aᵢ₃ . . . + aᵢN          │
│  Calculate:     xⱼ   =   positions between pitches, j = 1 ... N│
│                                                               │
│                 x₁   =   aᵢ₁ ( 2π/L )                         │
│                                                               │
│                 xⱼ   =   xⱼ₋₁ + aᵢⱼ ( 2π/L ) for j = 2 . . . N│
│  Calculate:     F(x) =   mathematical function                │
│                                                               │
│                         ⎧ 1 if x = xⱼ  for  j = 1 . . . N     │
│                 F(x) = ⎨                                       │
│                         ⎩ 0 otherwise                         │
│                                                               │
└─────────────────────────────────────────────────────────────┘
```

Mathematical Function : Noise vs. Position on Tire

Calculate: $L$ = total length of pitch sequence

$$L = a_{i1} + a_{i2} + a_{i3} \cdots + a_{iN}$$

Calculate: $x_j$ = positions between pitches, $j = 1 \ldots N$

$$x_1 = a_{i1} ( 2\pi/L )$$

$$x_j = x_{j-1} + a_{ij} ( 2\pi/L ) \text{ for } j = 2 \ldots N$$

Calculate: $F(x)$ = mathematical function

$$F(x) = \begin{cases} 1 & \text{if } x = x_j \text{ for } j = 1 \ldots N \\ 0 & \text{otherwise} \end{cases}$$

```
┌─────────────────────────────────────────────────────────────┐
│                    Harmonic Analysis                          │
│                                                               │
│  Input:       x   =  position around tire,  0 < x ≤ 2π        │
│                                                               │
│               F(x) = mathematical function                    │
│                                                               │
│  Output:      f   =  frequency in cycles/revolution           │
│                                                               │
│               A(f) = amplitude                                │
│                                                               │
└─────────────────────────────────────────────────────────────┘
```

Harmonic Analysis

Input: $x$ = position around tire, $0 < x \le 2\pi$

$F(x)$ = mathematical function

Output: $f$ = frequency in cycles/revolution

$A(f)$ = amplitude

```
┌─────────────────────────────────────────────────────────────┐
│     String Plot:  Noise Intensity vs. Frequency               │
│                                                               │
│    Abcissa  = f         30 ≤ f ≤ 150 cycles/rev               │
│                                                               │
│    Ordinate = A(f)                                            │
│                                                               │
└─────────────────────────────────────────────────────────────┘
```

String Plot: Noise Intensity vs. Frequency

Abcissa = $f$     $30 \le f \le 150$ cycles/rev

Ordinate = $A(f)$

Proceeding with the systematic search, it is noted that the aforementioned string plot was produced by assigning the prime number, 151, to the first pitch and the next four larger prime numbers, 157, 163, 167, and 173, respectively to the next four pitches. The search is continued by replacing the number assigned to the fifth pitch with the next highest prime number, 179. A second string plot is produced, which is compared to the first to assess the respective noise generating characteristics of the two sets of pitches. The search is continued by sequentially replacing the fifth pitch with the remaining prime numbers less than 300, generating string plots for each resulting combination of pitches, and assessing the string plots for potentially objectionable noise characteristics in a manner to be explained hereinafter. After all possible substitutions have been made for the fifth pitch, prime numbers between 150 and 300 are systematically substituted for the remaining four pitches. The complete searching algorithm is detailed in the following diagram.

Initially:  $a_1$ = smallest prime in selected range

$a_2$ = 2nd smallest prime in range

...

$a_5$ = 5th smallest prime in range

↓

Generate String Plot

↓

Assess String Plot and Save "Good" Combinations

↓

Increment $a_5$ to next larger prime

YES | Is $a_5$ greater than 300? | NO

↓

Increment $a_4$ to next larger prime

Decrement $a_5$ to next prime greater than $a_4$

YES | Is $a_5$ greater than 300? | NO

⋮                 ...

Increment $a_1$ to next larger prime

Decrement $a_2$...$a_5$ to next primes greater than $a_1$

YES | Is $a_5$ greater than 300? | NO

↓

Search is Done

The resulting search considers all possible combinations of the prime numbers between 150 and 300 taken five at a time in ascending order, generates a string plot for each combination.

In an analogous manner, if the evaluation was to be made for a higher velocity, say 80 m.p.h., then prime numbers between 111 and some higher practical number, say 300, would be taken five at a time, in ascending order, to generate a string plot for each combination.

Though the foregoing evaluation was made for five pitches, an evaluation may be made in an analogous manner for any desired number of pitches, typically from 3 to about 9. For three pitches, these may be 90.0 100.00 and 110.00. For six pitches, these may be 90.57 94.79 99.36 104.44 110.00 and 116.00

The string plots obtained are then assessed for potentially objectionable noise characteristics.

Assessment of string plots is done using the generally accepted criterion that sound is most objectionable, that is "noisy", when it is tonal in nature. A sound is tonal when its energy is, to a large extent, concentrated at one or a few frequencies. In a string plot, such an objectionable sound is characterized by the presence of one or more high peaks or spikes. On the other hand, a sound is generally acknowledged to be less noisy if its energy is relatively uniformly distributed among all frequencies. Such a sound exhibits characteristics commonly associated with the term "white noise", and its corresponding string plot features no high peaks but rather numerous small peaks, causing the plot to resemble a side view of a patch of grass.

While sets of pitches and/or pitch sequences may be assessed by comparing their associated string plots visually, the large number of pitch combinations involved in the aforementioned systematic search makes visual comparison impractical. Note that there are 27 prime numbers between 150 and 300, and that the number of combinations of 27 things taken five at a time is 80730. In actual practice, screening such large numbers of combinations is done most expeditiously using a computer program. The program can generate digital representations of string plots for all of the pitch combinations, then automatically select only those combinations for which the highest (maximum) peak is less than some preselected value, say 6 on a scale of 0 to 10, the latter number representing the highest peak. As has already been pointed out, an evaluation of the the string plots based on the highest peaks (indicating they are to be discarded) may be made visually.

Both the visual and computer procedures were applied to the SC32A pitch sequence already described. The result is that the large number of combinations can be reduced to but a handful of likely "good ones" with a very high degree of confidence that each of them is likely quite good, though one or two will be better than the rest. The following prime numbers were selected to correspond to each of the five pitches.

| Pitch Number | Prime Number |
|---|---|
| 1 | 151 |
| 2 | 167 |
| 3 | 211 |
| 4 | 239 |
| 5 | 257 |

Following the convention heretofore used to characterize pitches in the SC32A sequence, the prime numbers are expressed as a percent of the third prime number, 211.

| Pitch Number | Pitch |
|---|---|
| 1 | 71.6 |
| 2 | 79.2 |
| 3 | 100.0 |
| 4 | 113.3 |
| 5 | 121.8 |

It is noted that the above pitches, selected using the computer procedure already discussed, are numerically similar to the pitches which were heretofore described as being normally used in the commercially successful SC32A sequence, pitches generally acknowledged to have favorable noise characteristics.

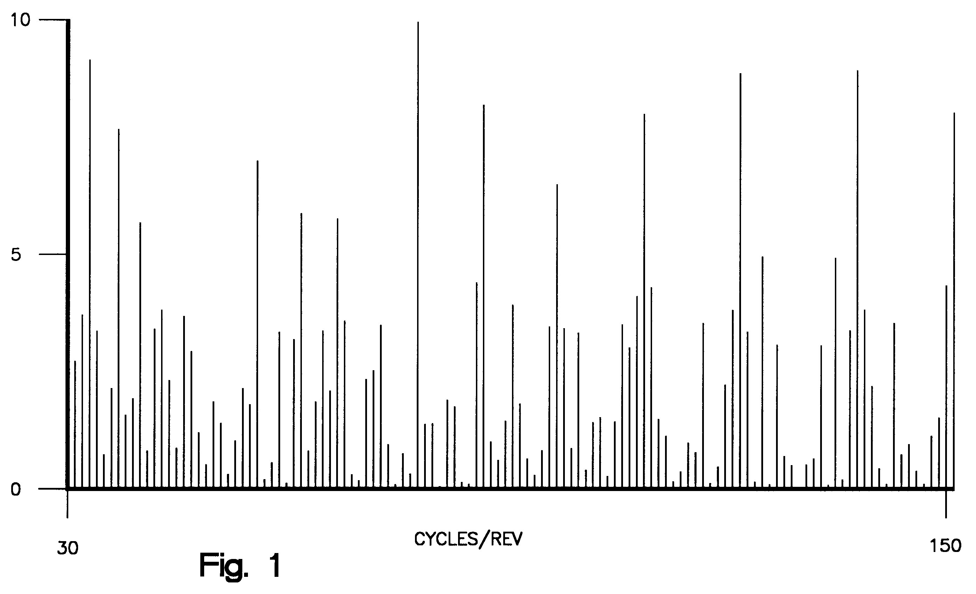

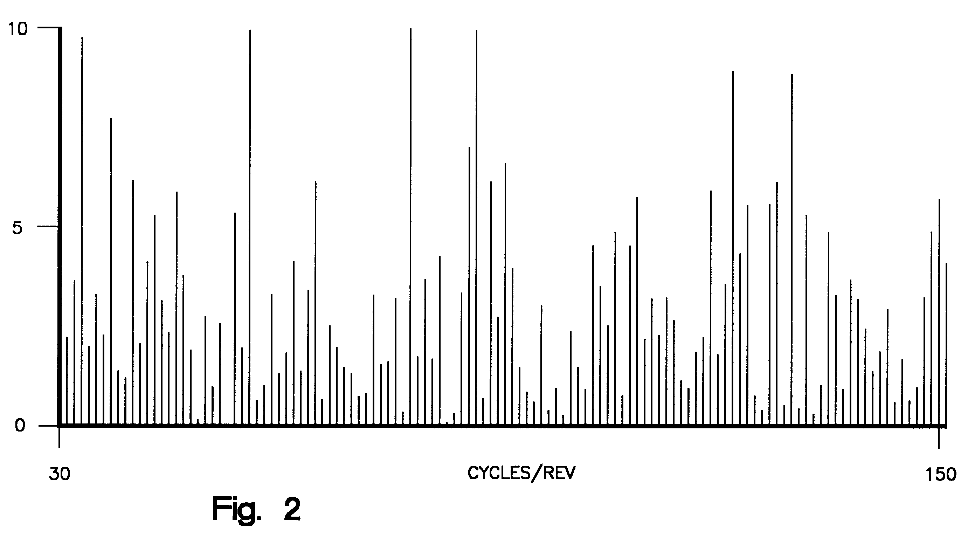

Referring now to Fig 1 there is shown a string plot generated for the commercially successful SC32A pitches in the pitch sequence set forth under the five pitches which were listed hereinabove; and in Fig 2 there is shown a string plot for the five pitches derived from prime numbers 151, 167, 211, 239, and 257. It is evident that there are two spikes in Fig 1 which are higher than any spike in Fig 2. Moreover, there are several more high spikes in Fig 1 than in Fig 2.

As one would expect, from theoretical considerations, the string plot generated with pitches derived from the computer procedure, actually do exhibit an improvement in theoretical noise characteristics. This can be accounted for by the maximum peak in the string plot of Fig 2 being 14% lower than that of the maximum peak of the pitches used commercially.

In an analogous manner a search may be made for a combination of six pitches using prime numbers, and comparing the combination of primes for the best string plot with a commercially successful combination of six pitches. The following results are obtained:

| Pitch Number | Prime Number | Commercial |
|---|---|---|
| 1 | 151 | 90.57 |
| 2 | 197 | 94.79 |
| 3 | 299 | 99.36 |
| 4 | 233 | 104.44 |
| 5 | 239 | 110.00 |
| 6 | 257 | 116.00 |

The aforementioned computer procedure identifies distinct pitches (each different from another) to be used with a given pitch sequence, with the aim of minimizing objectionable noise characteristics. A variation of the aforementioned procedure may be used in which the pitches are not constrained to be distinct. This is equivalent to permitting the same prime number to be used to correspond to two or more pitches in the sequence. The effect is to derive the benefits of using a five pitch sequence without using five pitches, only four.

A computer search was done with the SC32A sequence, again considering prime numbers between 150 and 300, allowing the any one or more of the pitches to be repetitive in the five pitch sequence. An evaluation of the very large number of combinations showed that when the last (fifth) pitch is the same as the fourth, an exceptionally noise-free string plot is the result.

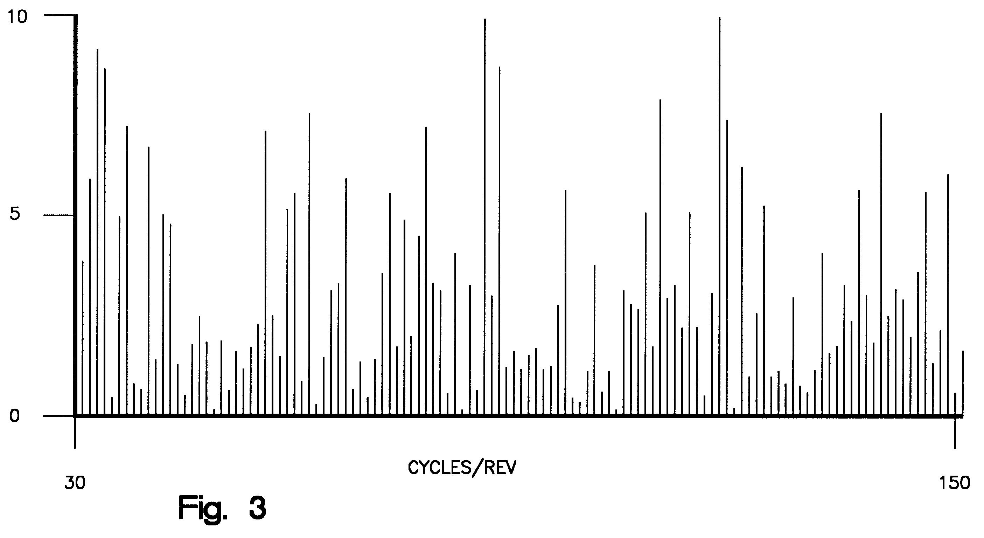

The following set of primes: 167, 181, 211, 239, 239 (the fourth and fifth being the same prime number) was identified as having excellent noise characteristics. This conclusion was reached by noting that a maximum peak on the string plot for the foregoing combination in Fig 3 is 21% less than that of the maximum peak in Fig 1, the string plot of the pitches used commercially.

When the number of variable pitches in a sequence is in the range from 3 to 4, one pitch may be repeated. When the number of variable pitches in a sequence is in the range from 5 to 6, one or two pitches may be repeated. The following pitches are for a five pitch sequence in which 1 pitch is repeated.

| Pitch Number | Prime Number |
|---|---|
| 1 | 167 |
| 2 | 181 |
| 3 | 211 |
| 4 | 239 |
| 5 | 239 |

Relative pitches are developed as before, by expressing each of the prime numbers as a percent of the third prime.

| Pitch Number | Pitch |
|---|---|
| 1 | 79.1 |
| 2 | 85.8 |
| 3 | 100.0 |
| 4 | 113.3 |
| 5 | 113.3 |

Besides reducing the tendency to generate objectionable noise, the combination of pitches in which the four-pitch sequence performs like a a five-pitch sequence results in substantial savings in the design and manufacture of tire molds incorporating the pitch sequence.

10

Tires have been built with the SC32A sequence using the aforementioned four-pitch combination and compared with tires of the same size using a tread with the SC32A sequence of pitches used commercially. Tests of the completed tires; performed by rolling the tires on a test wheel in an acoustically isolated chamber and electronically measuring resulting noise generation, demonstrated that the noise generated by the four-pitch sequence exhibited characteristics which are comparable to or less objectionable than the noise generated by the commercial sequence.

It will be recognised that for any given tire using approximately the same number of pitches (say in the range from about 80 to about 100) the level of sound energy generated by the pitches will be about the same irrespective of the specific pitch ratios used. Thus the average event frequency at any given speed (revs/min as a function of vehicle velocity) is about the same irrespective of the pitch ratios. The amount of sound generated by a large truck tire rolling at relatively low rpm is much greater than the amount of energy generated by a small passenger tire, but the level of sound generated by the passenger tire is higher than that of the truck tire. The aim is to distribute that total level of sound generated throughout a frequency range characterized as being "white noise". This is done by distributing and diffusing the level of sound energy by identifying and "flattening" the amplitude peaks associated with undesirable "noisy" frequencies having sufficiently high amplitudes to be objectionable.

From the foregoing it will now be evident that for the range of speeds from 60 m.p.h. to 80 m.p.h. the highest frequency to be chosen will range from 111 to 150, so that the smallest prime number to be used will be greater than a number within that range. The largest number chosen has been arbitrarily set to be 300 for the computing means at my disposal, but a higher number could be set if a "faster" computing means was available, or a longer time for evaluation was allowed to screen the large set of string plots which would be generated.

Depending upon the number of string plots to be evaluated in the large set, the evaluation may be done visually, simply by eliminating those in which any amplitude peak is greater than about 6 on a scale of 1 to 10, the highest peak being obtained in the large set being assigned the number 10.

A more efficient way of evaluating the large set of peaks is to provide a mathematical function which discriminates against those string plots in which there is a very high likelihood that the noise generated would be objectionable. Such a mathematical function would eliminate all string plots except those in the small set of string plots for those combinations in each of which the sound energy is distributed mainly as white noise.

A specific mathemeatical function defined as follows, has been used to good effect in screening string plots for objectionable noise characteristics.

Recall f = frequency in cycles/rev

$30 \leq f \leq 150$

A(f) = amplitude of noise at frequency f

Then

$$S = \text{mathematical function} = \sum_{f=31}^{150} [A(f) - A(f-1)]^2$$

Screening is accomplished by selecting those string plots which yield the smallest values of S.

An alternate method of evaluating the last few sequences which are deemed likely to yield the optimum low noise level may be evaluated by a computer simulation described in the aforementioned Parker et al U.S. Patent No. 4,727,501 the disclosure of which is incorporated by reference thereto as if fully set forth herein. In this computer simulation of the actual noise generated by a tread pattern, a sound is generated by digitizing the tread design on a coordinate system so as to define load-supporting portions of the tread (lugs) in contact with the pavement, and distinguish them in binary form from those portions of the tread which are not in contact (the valleys), as multiple matrix elements. A profile of a leading or trailing edge of a "footprint" of the tread is defined by fitting an equation to the edge. The time ensemble summation of the noise produced by each matrix element on the entire circumferential surface is sequentially performed. The sequence of summations is then converted to a periodic analog signal, which in turn, is converted to a sound. This sound is then aurally evaluated, typically by more than one person experienced in evaluating the sound.

The foregoing procedure is executed on each tread pattern derived from the pitches in the pitch sequence deemed likely to have the least objectionable noise. The noise generated by each computer simulation is then aurally evaluated to choose the least noisy tread.

As will now be evident, it is purely by chance that the mathematical derivation of a combination of aptly chosen prime numbers, when manipulated as described hereinabove, can be used to provide a meaningful string plot. Once a large set of string plots is obtained, it is relatively straightforward to determine which very few are likely to be translatable to the physical reality of pitches in a desired pitch sequence in a real tire. The computer simulation taught in the Parker patent is only a highly convenient way of doing so without actually making several sets of tires with the combinations to be finally evaluated. In actual practice, it will be recognized that even after the computer simulation and aural evaluation of the most promising combinations, real tires are made by cutting the tread patterns by hand and curing the tires, then testing the tires under actual road conditions.

Having thus provided a general discussion, and specific illustrations of the best mode of evaluating a set of pitches in a given pitch sequence in the tread of a tire, it is to be understood that no undue restrictions are to be imposed by reason thereof, except as provided by the following claims.

## Claims

1. A tire, the tread of which comprises load bearing elements distributed circumferentially as variable pitches in a preseleted pitch sequence, each pitch being derived from a prime number greater than the highest frequency (cycles/rev) at the highest velocity at which the tire is to travel with a desirably low level of objectionable noise, so that the ratio between any two pitches is functionally irrational.

2. The tire of claim 1 wherein the number of said variable pitches range from 3 to about 9.

3. The tire of claim 2 wherein said highest velocity is 80 m.p.h. and the smallest prime number is greater than 111.

4. The tire of claim 2 wherein said highest velocity is 60 m.p.h. and the smallest prime number is greater than 150.

5. The tire of claim 2 wherein the number of said variable pitches in a sequence is in the range from 3 to 4 and one pitch may be repeated.

6. The tire of claim 2 wherein the number of said variable pitches in a sequence is in the range from 5 to 6 and from 1 to 2 pitches may be repeated.

7. The tire of claim 2 wherein the number of said variable pitches in a sequence is in the range from 7 to 9 and from 1 to 3 pitches may be repeated.

8. The tire of claim 2 wherein said ratio between any two pitches is less than 2.

9. The tire of claim 3 wherein said ratio between any two pitches is less than 2, and the largest prime number is less than 222.

10. The tire of claim 4 wherein said ratio between any two pitches is less than 2, and the largest prime number is less than 300.

11. A method for producing a design of a tire's tread formed from a multiplicity of load-bearing elements or lugs separated by valleys in accordance with a pitch sequence using a plurality of variable pitches, said method comprising,
choosing from 3 to about 9 of said variable pitches and a pitch sequence;
determining the highest frequency (cycles/revolution) from the maximum vehicle velocity at which said tire is desired to be operated at an acceptable noise level of road noise due to the impact of said load-bearing elements on the road;
choosing a smallest prime number which is derived from and greater than said highest frequency, said smallest prime number to correspond to the smallest pitch, and the largest prime number based on a predetermined time within which a combination of primes may be generated within a computing means;
mathematically characterizing the noise generating features of the pitch sequence using each combination of pitches and obtaining a first function for all combinations of pitches; subjecting said first function to a harmonic analysis and generating a string plot for each combination of pitches so as to derive a large set of string plots;

evaluating said large set of string plots by eliminating those with an undesirably high amplitude so as to leave a relatively small set of few string plots; and,

producing the design of said tire's tread by ratioing the combination of pitches in the pitch sequence in accordance with the combination of prime numbers which generated a string plot with the least amount of objectionable noise.

12. The method of claim 11 wherein evaluating said large set of string plots is effected by using a second mathematical function weighted to eliminate all string plots except those in said small set of string plots for combinations, each of which shows that the sound energy is distributed mainly as white noise.

13. The method of claim 11 wherein evaluating said large set of string plots is effected by visually discarding string plots in which any amplitude peak is greater than about 6 on a scale of 1 to 10, the highest peak obtained in said large set being 10.

14. The method of claim 11 wherein said ratio between any two pitches is less than 2.

15. The method of claim 14 wherein said smallest prime number is greater than 111 and said largest prime number is smaller than 222.

16. The method of claim 14 wherein said smallest prime number is greater than 111 and said largest prime number is smaller than 222.

17. The method of claim 12 wherein said highest frequency ranges from about 111 to about 150 cycles/rev and from 1 to 2 pitches are repeated.

18. The method of claim 13 including evaluating each string plot in said small set by generating a sound which simulates the noise generated by the combination of pitches in each said string plot of said small set, said sound being generated by using a computing means.

CYCLES/REV

Fig. 1

EP 0 464 438 A1

Fig. 2

EP 0 464 438 A1

Fig. 3

EP 0 464 438 A1

EUROPEAN SEARCH REPORT

European Patent Office

Application Number

EP 91109855.6

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE - C2 - 3 218 219 (CONTINENTAL GUMMI-WERKE AG) * Fig. 1,4; column 4, lines 21-28,36-62 * -- | 1,11 | B 60 C 11/00 |
| A | EP - A2/A3- 0 329 927 (THE UNIROYAL GOODRICH TIRE COMPANY) * Totality * -- | | |
| D,A | US - A - 4 727 501 (PARKER et al.) * Totality * & EP-A2/A3-0 280 288 (THE UNIROYAL GOODRICH TIRE COMPANY) -- | | |
| A | EP - A1 - 0 050 197 (THE FIRESTONE TIRE & RUBBER COMPANY) * Totality * ---- | | |
| | | | TECHNICAL FIELDS SEARCHED (Int. Cl.5) |
| | | | B 60 C |

The present search report has been drawn up for all claims

| Place of search | Date of completion of the search | Examiner |
|---|---|---|
| VIENNA | 18-07-1991 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)